Europäisches Patentamt

European Patent Office

Office européen des brevets

(11) Numéro de publication: **0 457 994 B1**

# FASCICULE DE BREVET EUROPEEN

(45) Date de publication de fascicule du brevet: **12.10.94**

(51) Int. Cl.[5]: **F23C 11/00**, F23D 14/24, H05B 7/18

(21) Numéro de dépôt: **90401391.9**

(22) Date de dépôt: **23.05.90**

(54) **Electrobrûleur à gaz à apport d'énergie électrique et amorçage assisté.**

(43) Date de publication de la demande:
**27.11.91 Bulletin 91/48**

(45) Mention de la délivrance du brevet:
**12.10.94 Bulletin 94/41**

(84) Etats contractants désignés:
**AT BE CH DE DK ES GB GR IT LI LU NL SE**

(56) Documents cités:
**FR-A- 2 577 304**

(73) Titulaire: **ELECTRICITE DE FRANCE Service National**
**2, rue Louis Murat**
**F-75008 Paris (FR)**

(72) Inventeur: **Leleu, Serge**
**32, Avenue de la Peypine**
**F-13011 Marseille (FR)**
Inventeur: **Aschard, Jean-Luc**
**38, rue Montrichard**
**F-77250 Moret-sur-Loing (FR)**
Inventeur: **Bouvier, Alain**
**4, rue des Provenceaux**
**F-77300 Fontainebleau (FR)**

(74) Mandataire: **Fort, Jacques**
**CABINET PLASSERAUD**
**84, rue d'Amsterdam**
**F-75009 Paris (FR)**

## Description

L'invention concerne les brûleurs à gaz à apport d'énergie électrique, du type comprenant un dispositif d'injection de gaz combustible dans l'axe de moyens annulaires d'amenée fournissant un courant d'air en rotation et comprenant une électrode amont et une contre-électrode reliées par l'intermédiaire d'une source principale de courant, placées dans un ouvreau de réception de gaz de combustion, l'électrode amont étant placée suivant l'axe des moyens annulaires et étant destinée à créer un arc d'apport d'énergie à travers la flamme du brûleur.

Un tel électrobrûleur est décrit dans le brevet n° 2 577 304 (Electricité de France et Stein Heurtey) délivré le 1er décembre 1989. Il peut être réalisé en n'apportant que des modifications de structure limitée à la constitution d'un brûleur à gaz traditionnel. Il comporte, en plus du brûleur modifié, des moyens placés sur le dispositif d'injection de gaz, incluant notamment un injecteur-tuyère formant électrode, et un générateur haute tension permettant de créer un effluve entre une électrode centrale, reliée à l'électrode amont, et l'injecteur-tuyère dans lequel le gaz atteint une vitesse supersonique.

Si cette constitution donne des résultats satisfaisants, elle est en contrepartie complexe. L'invention vise notamment à simplifier la constitution matérielle du brûleur et également celle de ses circuits d'alimentation électrique.

Dans ce but, l'invention propose notamment un brûleur à gaz du type ci-dessus défini, caractérisé en ce qu'il comporte un déflecteur placé sur le trajet du courant d'air, à une distance de l'électrode amont suffisamment faible pour permettre l'amorçage d'un arc entre l'électrode amont et le déflecteur sous une tension de quelque million de volt, et des moyens permettant d'établir une tension d'amorçage d'arc entre l'électrode amont et le déflecteur.

Cette disposition permet de supprimer l'injecteur-tuyère du dispositif suivant le document FR-A-2 577 304.

Pour réduire la tension d'amorçage, le déflecteur est avantageusement constitué par un disque conducteur ayant une surface placée en regard de l'électrode amont et à une distance de cette dernière comprise entre 1 et 3 mm. Il suffit alors d'une tension de quelques milliers de Volts pour provoquer l'ionisation et amorcer la décharge. Ce système permet d'amorcer l'allumage de gaz avec l'air de combustion.

Une électrode relais, ou plusieurs, peuvent être prévues entre le déflecteur, constituant électrode d'amorçage, et la contre-électrode sur laquelle doit s'accrocher la décharge en régime permanent, pour faciliter le passage de l'arc de l'un à l'autre. L'électrode relais (ou chaque électrode relais) peut être constituée par une protubérance métallique portée par la paroi de l'ouvreau et portée au même potentiel que la contre-électrode.

La source principale de courant, capable de fournir une haute intensité sous tension relativement faible, est avantageusement une source principale de courant continu placée en série avec une source auxiliaire d'alimentation, fournissant une tension élevée à vide, mais ne fournissant plus qu'une tension très faible lorsqu'elle est parcourue par un courant important. La source principale et la source auxiliaire sont placées en série dans un circuit qui se referme, d'une part, par l'électrode amont, d'autre part, par le déflecteur (éventuellement par l'intermédiaire d'une résistance de limitation de courant) et par la contre-électrode.

Cette disposition présente, entre autres avantages, celui d'assurer la stabilité de l'arc en régime permanent, toute diminution importante du courant se traduisant par une remontée de la tension fournie par la source d'alimentation auxiliaire ; cette source auxiliaire peut cependant être coupée si la stabilité de l'arc est suffisante, ce qui permet de réduire la puissance réactive de l'ensemble.

Dans une variante de réalisation, la contre-électrode placée en aval est mobile ; on peut ainsi démarrer à partir d'un court-circuit entre les deux électrodes. Cette disposition permet d'aller encore plus loin dans la simplification du système, par suppression de l'alimentation auxiliaire de démarrage et des électrodes relais.

Les deux électrodes (notamment l'électrode amont) sont avantageusement munies d'aimants et de culasses en matériau ferro-magnétique de retour de flux, suivant une disposition qui crée un champ magnétique provoquant la rotation de l'arc, ce qui rend l'usure des électrodes plus régulière.

L'invention sera mieux comprise à la lecture de la description qui suit d'un mode particulier de réalisation et de variantes, donnés à titre d'exemples non limitifs. La description se réfère aux dessins qui l'accompagnent, dans lesquels :

- la Figure 1 est un schéma simplifié d'un brûleur suivant un mode de réalisation de l'invention, en coupe suivant un plan passant par son axe ;
- la Figure 2 est une vue en perspective destinée à faire apparaître la disposition relative des composants du brûleur de la Figure 1 ;
- la Figure 3 est un diagramme montrant la variation de l'intensité du courant d'arc Iarc et de la tension d'arc Varc en fonction du temps, dans des conditions de fonctionnement représentatives de perturbations ;
- les Figures 4 et 5 sont des schémas montrant des dispositions possibles d'aimants de création d'un champ magnétique de maintien en déplacement du pied d'arc, dans une électrode du brûleur montré en Figures 1 et 2 ;

- la Figure 6 est une vue de détail à grande échelle de l'ensemble déflecteur-électrode amont du brûleur de la Figure 1, en coupe suivant un plan passant par l'axe ;
- la Figure 7 est une vue éclatée, en perspective, de la bague isolante de la Figure 6 et de ses moyens de fixation ;
- la Figure 8, similaire à une fraction de la Figure 1, montre une variante de réalisation.

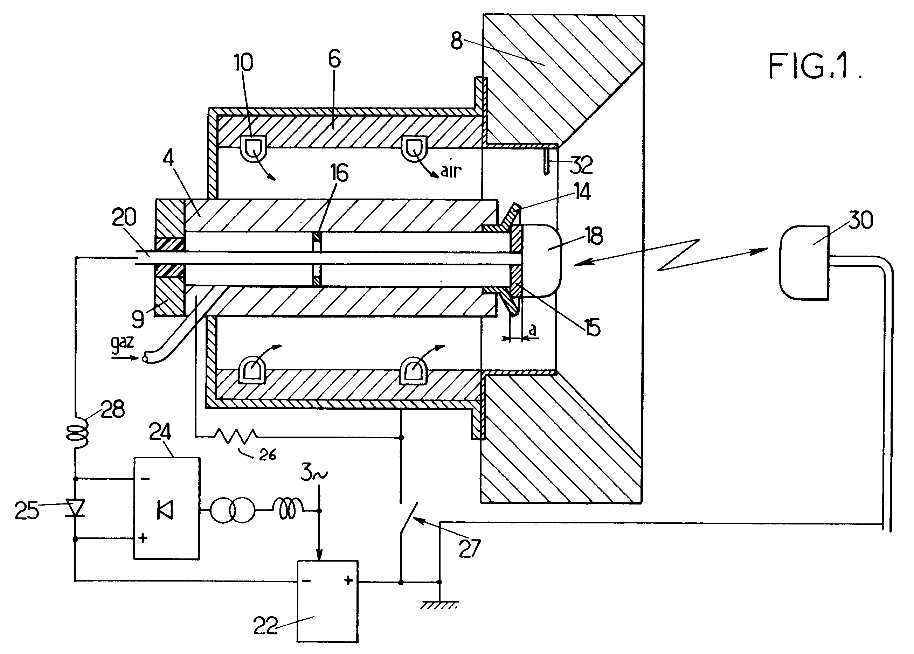

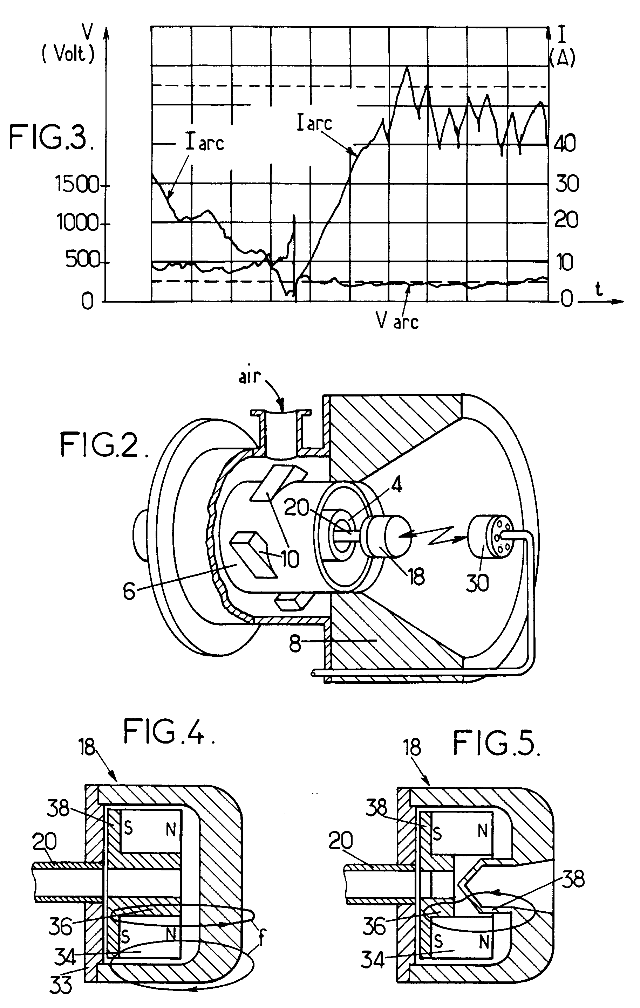

Le brûleur montré schématiquement en Figures 1 et 2 comporte un dispositif d'injection de gaz 4 placé dans l'axe de moyens annulaires d'amenée d'air de combustion et muni d'un conduit d'amenée 9. Les moyens annulaires comprennent un corps 6 qui porte des buses 10 d'amenée tangentielle d'air de combustion, imposant à cet air un mouvement de rotation autour de l'axe du dispositif d'injection 4. Le corps 6 se raccorde à un ouvreau 8, généralement en matériau réfractaire, qui délimite une chambre de combustion où se développe la flamme. Cet ouvreau présente une forme intérieure évasée, par exemple tronconique, qui canalise les courants gazeux et favorise les mélanges.

Le dispositif 4 d'injection de gaz comporte, a son extrémité aval, un déflecteur 14 en forme de disque présentant un diamètre voisin de celui du noyau de recirculation de l'écoulement d'air tourbillonnaire induit par les buses 10. Le déflecteur 14 a pour fonction d'arrêter les remontées de gaz chaud autour du dispositif d'injection et de stabiliser les courants de gaz à la sortie du dispositif d'injection, et donc la flamme.

Les composants du brûleur décrits jusqu'ici sont similaires à ceux décrits dans le document FR-A-2 577 304 déjà mentionné.

Le dispositif d'injection de gaz montré en Figure 2 est en revanche dépourvu de tuyères destinées à donner au gaz une vitesse supersonique au col, utilisées pour le démarrage du brûleur de l'art antérieur. Mais un diaphragme 16 sera en général prévu pour limiter le débit de gaz.

Le brûleur comporte une électrode amont 18 placée devant le disque déflecteur 14 et portée par un tube 20 d'amenée de courant qui traverse le fond du dispositif d'injection 4.

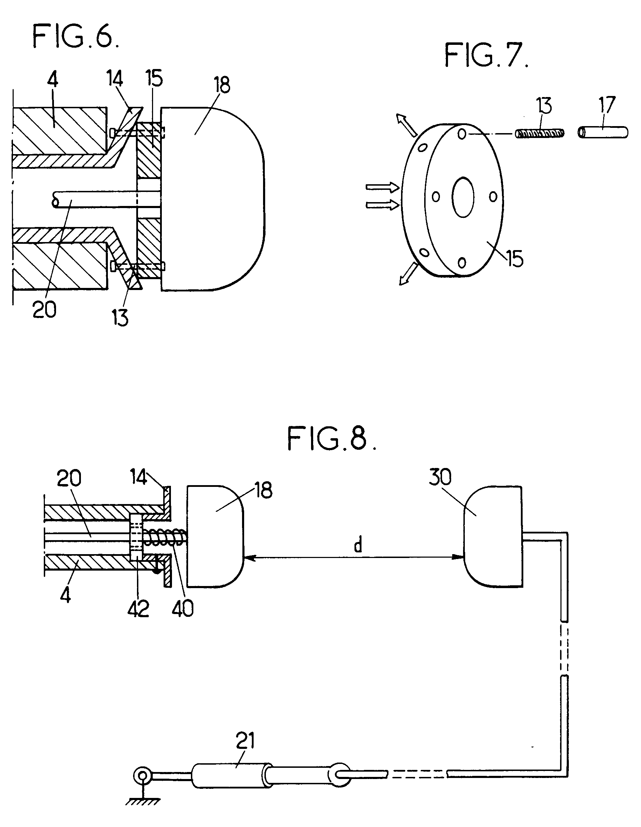

Le déflecteur 14 est isolé électriquement de l'électrode 18 par une bague isolante 15 (Figure 6). La bague est percée de trous, comme indiqué sur la Figure 7, pour permettre le passage de gaz. L'ensemble 14, 15, 18 est assemblé mécaniquement par des goujons 13 gainés d'un tube 17 d'isolation électrique (Figure 7).

La distance a entre la face arrière de l'électrode amont 18 et le disque déflecteur 14 est suffisamment faible pour qu'on puisse amorcer un arc entre eux sous une tension de quelques milliers de volts : dans la pratique, on donnera souvent à a une valeur comprise entre 1 et 1,5 mm, permettant un amorçage sous 3000 V environ. Cette distance, relativement faible, est avantageusement maintenue par le système de fixation précédemment décrit.

Des moyens permettant d'établir la tension d'amorçage d'arc entre l'électrode amont 18 et le disque déflecteur 14 sont constitués, dans le mode de réalisation illustré sur la Figure 1, par une source principale de courant continu et une source auxiliaire, placées en série. La source principale est constituée par un redresseur de puissance 22, capable de fournir une intensité réglable, sous une tension de quelques centaines de Volts. Dans la pratique, on peut par exemple utiliser un redresseur dont l'intensité et la tension de sortie nominales sont respectivement de 700 A et 500 V. La source auxiliaire est constituée par un redresseur 24 associé à des moyens saturables, de façon qu'il fournisse une tension élevée (par exemple 2500 V) lorsqu'il est à vide, c'est-à-dire ne débite aucun courant, et que sa tension de sortie s'effondre dès qu'il doit fournir du courant. On peut notamment utiliser une source pouvant fournir 30 A en court-circuit, c'est-à-dire sous une tension pratiquement nulle, et quelques milliers de Volts à vide. Une diode 25 peut être prévue pour court-circuiter le redresseur 24 lorsqu'un courant inverse tend à le parcourir.

Le circuit destiné à établir un arc entre le disque déflecteur 14 et l'électrode 18 comporte, à partir du dispositif d'injection de gaz 4 (relié électriquement au disque déflecteur), une résistance 26 de limitation de courant, les sources 22 et 24 et une inductance 28 destinée à réduire les instabilités en fournissant, pendant les périodes transitoires, une énergie s'opposant à l'extinction de l'arc. Cette inductance peut avoir une valeur inférieure à celle qui serait nécessaire pour écarter les risques d'extinction dans un dispositif n'ayant pas de source auxiliaire, car cette dernière intervient pour procurer la surtension de maintien d'arc nécessaire si l'intensité du courant d'arc devient trop faible. Dans la pratique, il suffira en général d'une inductance de 5 à 10 milli-Henry.

La borne de la source principale 22 qui est reliée au dispositif d'injection 4 par l'intermédiaire de la résistance 26 est mise à la masse et est reliée également à l'enveloppe du corps 6 et à la contre-électrode 30, placée en alignement avec l'électrode amont 18. On voit que les deux sources sont placées en série dans le circuit d'établissement et de maintien d'arc entre l'électrode amont 18 et la contre-électrode 30.

Le brûleur comporte une électrode relais 32 reliée électriquement à l'enveloppe du corps 16, et donc à la terre, qui peut être constituée par une simple saillie métallique 32.

Le fonctionnement du brûleur est le suivant.

Pour démarrer le brûleur, on l'alimente en air et en gaz et on relie la source principale 22, puis la source auxiliaire 24 au réseau. Un arc s'amorce entre l'électrode amont 18 et le disque déflecteur 14, avec une intensité limitée par la résistance 26. Le courant de gaz (hydrocarbures par exemple) envoyé dans le dispositif d'injection par le conduit 9 souffle l'arc et transfère le pied d'arc, dans un premier temps, du disque déflecteur 14 à l'électrode relais 32, puis, dans un second temps, à la contre-électrode 30. Il faut remarquer que l'arc d'amorçage ne se produit pas à l'intérieur du dispositif d'injection 4, fréquemment en graphite. Il n'y a en conséquence pas arrachement de carbone et pas d'usure de la bague isolante 15.

Une fois l'arc transféré à la contre-électrode 30, un régime permanent s'établit. En régime stable, la source principale 22 fournit par exemple un courant de 700 A sous 500 V. La source électrique 22 est alors pratiquement en court-circuit et ne joue aucun rôle.

Si une instabilité de l'arc apparaît, l'inductance 28 intervient pour procurer une énergie supplémentaire. Si elle est insuffisante, la source auxiliaire 24 fournit la surtension nécessaire. Dans le cas illustré sur la Figure 3 (correspondant à un montage avec une inductance de 1,5 mH), on voit que la tension d'arc Varc augmente rapidement dès que des oscillations de courant pouvant provoquer l'extinction de l'arc apparaissent.

La source auxiliaire 24 a donc une double fonction : d'une part, elle facilite l'amorçage, d'autre part, elle stabilise l'arc et permet de réduire l'inductance nécessaire, donc le coût du composant correspondant.

Dans une variante de réalisation de l'ensemble brûleur-alimentation électrique, montrée en Figure 8, la contre-électrode 30 est mobile. Sur la Figure 8, les moyens de déplacement de l'électrode sont constitués par un vérin 21 asservi en position de manière à pouvoir faire démarrer l'électro-brûleur en court-circuit. Cette variante a divers avantages :

- suppression de l'alimentation auxiliaire haute tension 24 pour le démarrage ;
- suppression de la résistance 26 et de l'électrode relais 32 ;
- inutilité du maintien d'une distance précise entre le déflecteur 14 et l'électrode 18 (puisque le démarrage de l'arc ne s'effectue plus entre ces deux pièces) ;
- à intensité de courant fixée I, possibilité de régler la tension nominale de fonctionnement U (et donc la puissance P = UI) en faisant varier la distance $\underline{d}$ entre les deux électrodes, car U est une fonction croissante de $\underline{d}$, toutes choses égales par ailleurs.

Pour éviter d'endommager les deux électrodes lorsqu'on les met en court-circuit, on peut par exemple mettre un ressort d'amortissement 40 (Figure 8) sur la tige 20 de l'électrode amont 18 qui vient buter sur une bague 42 de coulissement de la tige 20. Cette bague est solidarisée du corps du dispositif 4 par l'intermédiaire du déflecteur 14. Elle est trouée pour permettre le passage du gaz.

Il est souhaitable de provoquer un déplacement du pied d'arc sur les électrodes 18 et 30 pour éviter une destruction rapide de ces dernières. Les dispositions montrées en Figures 4 et 5 créent, à l'aide d'aimants permanents, des forces électromagnétiques de mise en rotation du pied d'arc.

Dans le mode de réalisation montré en Figure 4, l'électrode 18 comporte un corps d'électrode en forme de cuvette fermée par un fond 33. Le corps et le fond peuvent être en matériau bon conducteur, par exemple en cuivre refroidi par circulation de fluide. Dans la chambre délimitée par le corps et le fond sont logés des aimants 34 portés par deux noyaux en fer doux 36 et 38 constituant une culasse. Ce montage crée un champ magnétique dont les lignes de force ont l'allure indiquée par les lignes $\underline{f}$ de la Figure 4, qui fait tourner le pied d'arc autour de l'axe de l'électrode.

Le noyau 38, en forme de disque, non seulement vise à faire tourner le pied d'arc, mais aussi l'empêche d'aller se fixer sur la partie arrière de l'électrode le noyau 36 repousse le pied d'arc s'il se dirige vers le centre de l'électrode.

Dans certains brûleurs, des perturbations, par exemple des instabilités dues aux mouvements des gaz, peuvent permettre au pied d'arc de venir se placer au centre de l'électrode 18 : dans ce cas, il y reste, car cette position est stable. Il y a alors usure prématurée de la partie centrale de l'électrode.

La variante de réalisation de l'électrode 18 montrée en Figure 5 (où les éléments correspondant à ceux de la Figure 4 sont désignés par le même numéro de référence) écarte ce risque. Dans l'électrode de la Figure 5, le corps présente une partie centrale en creux 38 et le noyau tubulaire 36 est raccourci en conséquence. Une modélisation des lignes de champ montre que si le pied d'arc tend à pénétrer dans la partie creuse 38, il est automatiquement repoussé à l'extérieur par les forces de Laplace.

## Revendications

1. Brûleur à gaz à apport d'énergie électrique, comportant un dispositif (4) d'injection de gaz combustible dans l'axe de moyens annulaires d'amenée fournissant un courant d'air en rotation et comprenant une électrode amont (18) et une contre-électrode (30) reliées par l'intermédiaire d'une source principale de courant placées dans un ouvreau (8) de réception de gaz de combustion, l'électrode amont (18) étant placée suivant l'axe des moyens annulaires, laissant disponible un passage de gaz et étant destinée à créer un arc d'apport d'énergie à travers la flamme du brûleur, caractérisé en ce qu'il comporte un déflecteur (14) placé sur le trajet du courant d'air à l'extrémité aval dudit dispositif, à une distance de l'électrode amont suffisamment faible pour permettre l'amorçage d'un arc entre l'électrode amont et le déflecteur sous une tension de quelque milliers de volt, et des moyens permettant d'établir ladite tension d'amorçage d'arc entre l'électrode amont (18) et le déflecteur (14).

2. Brûleur selon la revendication 1, caractérisé en ce que le déflecteur (14) est constitué par un disque conducteur ayant une surface placée en regard de l'électrode amont et à une distance de cette dernière comprise entre 1 et 3 mm.

3. Brûleur selon la revendication 1 ou 2, caractérisé en ce qu'au moins une électrode relais (32) est placée entre le déflecteur (14) et la contre-électrode.

4. Brûleur selon la revendication 3, caractérisé en ce que l'électrode relais est constituée par une protubérance métallique portée par la paroi de l'ouvreau et portée au même potentiel que la contre-électrode.

5. Brûleur selon lune quelconque des revendications précédentes, caractérisé en ce que la source principale de courant (22) est une source de courant continu placée en série avec une source auxiliaire d'alimentation, fournissant une tension élevée à vide, mais ne fournissant plus qu'une tension très faible lorsqu'elle est parcourue par un courant important.

6. Brûleur selon la revendication 5, caractérisé en ce que la source principale (22) et la source auxiliaire (24) sont placées en série dans un circuit qui se referme, d'une part, par l'électrode amont (18), d'autre part, par le déflecteur (14), éventuellement par l'intermédiaire d'une résistance (26) de limitation de courant, et par la contre-électrode (30)

7. Brûleur à gaz à apport d'énergie électrique, comportant un dispositif (4) d'injection de gaz combustible dans l'axe de moyens annulaires d'amenée fournissant un courant d'air en rotation et comprenant une électrode amont (18) et une contre-électrode (30) reliées par l'intermédiaire d'une source principale de courant placées dans un ouvreau (8) de réception de gaz de combustion, l'électrode amont (18) étant placée suivant l'axe des moyens annulaires et étant destinée à créer un arc d'apport d'énergie, à travers la flamme du brûleur, caractérisé en ce que la contre-électrode (30) est déplaçable par rapport à l'électrode (18) de manière à permettre de démarrer en court-circuit.

8. Brûleur selon l'une quelconque des revendications précédentes, caractérisé en ce que l'une au moins des électrodes (14, 30) est munie d'aimants et de culasses en matériau ferromagnétique de retour de flux, suivant une disposition qui crée un champ magnétique provoquant la rotation de l'arc.

9. Brûleur selon la revendication 8, caractérisé en ce que l'électrode comporte un évidement central (38) empêchant le pied d'arc de s'accrocher dans l'axe.

**Claims**

1. Gas burner with an additional supply of electric power, comprising a device (4) for injecting fuel gas along the axis of annular delivery means delivering a rotating air stream and comprising an upstream electrode (18) and a counter electrode (30) connected via a main current source, placed in a burnt gas reception chamber (8), the upstream electrode (18) being placed along the axis of the annular means, defining a gas flow passage and arranged for generating an energy supply arc across the flame of the burner, characterized in that it comprises a deflector (14) placed in the path of the air stream at the downstream end of said device, at a distance of the upstream electrode which is sufficiently low for permitting striking an arc between the upstream electrode and the deflector under a voltage of some thousands volts, and means for providing said arc striking voltage between the upstream electrode (18) and the deflector (14).

2. Burner according to claim 1, characterized in that the deflector (14) is constituted by an electrically conducting disk having a surface confronting the upstream electrode and at a distance therefrom between 1 and 3 mm.

3. Burner according to claim 1 or 2, characterized in that at least one relay electrode (32) is located between the deflector (14) and the counter electrode.

4. Burner according to claim 3, characterized in that the relay electrode is constituted by a metal projection carried by the wall of the chamber receiving combustion gas and brought to the same electrical voltage as the counter electrode.

5. Burner according to any one of the preceding claims, characterized in that the main current source (22) is a DC current source in series with an auxiliary supply source which delivers a high voltage when off-load and supplies a very low voltage when traversed by a large current.

6. Burner according to claim 5, characterized in that the main source (22) and the auxiliary source (24) are in series relation in a circuit which is closed, on the one hand, through the upstream electrode (18) and, on the other hand, through by the deflector (14), possibly via a current limiting resistor (26) and through the counter electrode (30).

7. Gas burner with additional electric power supply, comprising a device (4) for injecting fuel gas along the axis of annular delivery means delivering a rotating air stream and comprising an upstream electrode (18) and a counter electrode (30) connected via a main current source, placed in a burnt gas reception chamber (8), the upstream electrode (18) being placed along the axis of the annular means and arranged for generating an energy supply arc across the flame of the burner, characterized in that the counter electrode (30) is movable with respect to the electrode (18) for permitting a start in short circuited condition.

8. Burner according to any one of the preceding claims, characterized in that at least one of the electrodes (14,30) is provided with magnets and armatures of ferro-magnetic material for flux line return, in an arrangement which generates a magnetic field causing rotation of the arc.

9. Burner according to claim 8, characterized in that the electrode has a central recess (38) to prevent the arc foot from locking along the axis.

**Patentansprüche**

1. Gasbrenner mit Zufuhr von elektrischer Energie mit einer Vorrichtung (4) zum Einblasen von Brenngas auf der Achse einer ringförmigen Zufuhreinrichtung, die einen rotierenden Luftstrom liefert und eine stromauf gelegene Elektrode (18) sowie eine Gegenelektrode (30) aufweist, die über eine Hauptstromquelle miteinander verbunden und in einer Arbeitsöffnung (8) für die Aufnahme von Verbrennungsgas angeordnet sind, wobei die stromauf gelegene Elektrode (18) auf der Achse der ringförmigen Einrichtung angeordnet ist, einen Gasdurchtritt frei läßt und zur Erzeugung eines Lichtbogens für die Zufuhr von Energie quer durch die Flamme des Brenners dient,
**gekennzeichnet**
durch einen Ablenker (14), der am stromab gelegenen Ende der Vorrichtung auf der Bahn des Luftstroms von der stromauf gelegenen Elektrode in einem Abstand angeordnet ist, der ausreichend klein ist, um das Auslösen eines Lichtbogens zwischen der stromauf gelegenen Elektrode und dem Ablenker bei einer Spannung von einigen tausend Volt zu ermöglichen, und durch eine Einrichung, die den Aufbau der Lichtbogenzündspannung zwischen der stromauf gelegenen Elektrode (18) und dem Ablenker (14) ermöglicht.

2. Brenner nach Anspruch 1, dadurch gekennzeichnet, daß der Ablenker (14) eine leitende Scheibe ist, deren Oberfläche einer stromauf gelegenen Elektrode in einem Abstand von 1 bis 3 mm gegenüberliegt.

3. Brenner nach Anspruch 1 oder 2, dadurch gekennzeichnet, daß zwischen dem Ablenker (14) und der Gegenelektrode eine Relaiselektrode (32) angeordnet ist.

4. Brenner nach Anspruch 3, dadurch gekennzeichnet, daß die Relaiselektrode durch einen metallischen Vorsprung gebildet ist, der von der Wand der Arbeitsöffnung getragen wird und auf das gleiche Potential wie die Gegenelektrode gebracht ist.

5. Brenner nach einem der vorhergehenden Ansprüche, dadurch gekennzeichnet, daß die Hauptstromquelle (22) eine Gleichstromquelle ist, die mit einer Hilfsspeisequelle in Reihe geschaltet ist, die im unbelasteten Zustand eine hohe Spannung liefert, jedoch eine nur sehr geringe Spannung liefert, wenn sie von einem starken Strom durchflossen wird.

6. Brenner nach Anspruch 5, dadurch gekennzeichnet, daß die Hauptquelle (22) und die Hilfsquelle (24) in einem Kreis in Reihe geschaltet sind, der einerseits mit der stromauf gelegenen Elektrode (18) und andererseits mit dem Ablenker (14), gegebenenfalls unter Zwischenschaltung eines Widerstands (26) für die Strombegrenzung, und mit der Gegenelektrode (30) endet.

7. Gasbrenner mit Zufuhr von elektrischer Energie mit einer Vorrichtung (4) zum Einblasen von Brenngas auf der Achse einer ringförmigen Zufuhreinrichtung, die einen rotierenden Luftstrom liefert und eine stromauf gelegene Elektrode (18) und eine Gegenelektrode (30) aufweist, die über eine Hauptstromquelle miteinander verbunden und in einer Arbeitsöffnung (8) für die Aufnahme von Verbrennungsgas angeordnet sind, wobei die stromauf gelegene Elektrode (18) auf der Achse der ringförmigen Einrichtung angeordnet ist und zur Erzeugung eines Lichtbogens für die Zufuhr von Energie quer durch die Flamme des Brenners dient,
dadurch **gekennzeichnet,**
daß die Gegenelektrode (30) gegenüber der Elektrode (18) derart verschiebbar ist, daß ein Starten im Kurzschluß möglich ist.

8. Brenner nach einem der vorhergehenden Ansprüche, dadurch gekennzeichnet, daß wenigstens eine der Elektroden (14, 30) mit Magneten und Rückflußjochen aus ferroelektrischem Material gemäß einer Anordnung versehen ist, die ein die Drehung des Lichtbogens hervorrufendes Magnetfeld erzeugt.

9. Brenner nach Anspruch 8, dadurch gekennzeichnet, daß die Elektrode eine zentrale Ausnehmung (38) aufweist, die den Lichtbogenfuß daran hindert, sich auf der Achse einzuhängen.

FIG.1.

8

FIG.3.

FIG.2.

FIG.4.

FIG.5.

# FIG.6.

# FIG.7.

# FIG.8.